(19) **Europäisches Patentamt**

**European Patent Office**

**Office européen des brevets**

(11) **EP 1 070 073 B1**

(12) **FASCICULE DE BREVET EUROPEEN**

(45) Date de publication et mention
de la délivrance du brevet:
**18.06.2003 Bulletin 2003/25**

(51) Int Cl.⁷: **C07F 7/12**

(21) Numéro de dépôt: **99913357.2**

(22) Date de dépôt: **02.04.1999**

(86) Numéro de dépôt international:
**PCT/FR99/00771**

(87) Numéro de publication internationale:
**WO 99/051611 (14.10.1999 Gazette 1999/41)**

(54) **PREPARATION D'HYDROGENOSILANES PAR HYDROGENOLYSE CATALYTIQUE DE POLYSILANES**

HERSTELLUNG VON HYDROGENSILANEN DURCH KATALYTISCHE HYDROGENOLYSE VON POLYSILANEN

PREPARATION OF HYDROGENOSILANES BY CATALYTIC HYDROGENOLYSIS OF POLYSILANES

(84) Etats contractants désignés:
**DE FR GB NL**

(30) Priorité: **07.04.1998 FR 9804600**

(43) Date de publication de la demande:
**24.01.2001 Bulletin 2001/04**

(73) Titulaire: **RHODIA CHIMIE**
**92408 Courbevoie Cédex (FR)**

(72) Inventeurs:
- **COLIN, Pascale**
  **F-69680 Chassieu (FR)**
- **DE BELLEFON, Claude**
  **F-69330 Meyzieu (FR)**
- **GARCIA-ESCOMEL, Cristina**
  **F-69005 Lyon (FR)**
- **GRENOUILLET, Pierre**
  **F-69270 Fontaines-sur-Saône (FR)**
- **MOREL, Philippe**
  **F-38200 Chuzelles (FR)**

(74) Mandataire: **Trolliet, Maurice et al**
**RHODIA SERVICES**
**Direction de la Propriété Industrielle**
**CRIT-Carrières - BP 62**
**69192 Saint-Fons Cédex (FR)**

(56) Documents cités:
**EP-A- 0 700 920**          **FR-A- 2 239 474**
**FR-A- 2 342 981**          **US-A- 4 079 071**
**US-A- 5 175 329**

**Description**

Le domaine de l'invention est celui de l'obtention d'hydrogénoalkylsilanes à partir de polysilanes et en particulier de disilanes.

Plus précisément, l'invention a pour objet un procédé de préparation d'hydrogénochlorométhylsilanes par hydrogénolyse catalytique de la liaison Si-Si de chlorométhylpolysilanes, avec de l'hydrogène gazeux sous pression.

Dans l'industrie des silicones, les méthylchlorosilanes sont les unités élémentaires impliquées dans la construction des polymères silicones (polyorganosiloxanes-POS-). Les méthylchloro-silanes sont presque toujours fabriqués par synthèse directe (synthèse de Rochow-Müller) avec du silicium et du chlorure de méthyle. Cette synthèse conduit à du $(CH_3)_2SiCl_2$ (65-85 %), $CH_3SiCl_3$ (7-18 %), $(CH_3)_3SiCl$ (2-4 %), $CH_3SiHCl_2$(0,5%) et polysilanes (6-8 %).

Ces polysilanes sont des composés à haut point d'ébullition qui constituent les fractions lourdes des distillations mises en oeuvre pour séparer les divers monomères produits par la synthèse directe. Ces polysilanes comprennent des disilanes qui sont : $(CH_3)Cl_2Si-SiCl(CH_3)_2$ ; $(CH_3)Cl_2Si-SiCl_2(CH_3)$ ; $(CH_3)Cl_2Si-Si(CH_3)_3$ ; $(CH_3)_2ClSiSiCl(CH_3)_2$ désignées respectivement par $Me_{12}$, $Me_{11}$, $Me_{13}$, $Me_{22}$ respectivement, chaque chiffre des indices correspondant au nombre de substituants méthyles portés par l'un et l'autre des atomes de silicium des disilanes. Le $Me_{12}$, le $Me_{11}$ et le $Me_{13}$ sont dénommés également disilanes « scindables ». Ils représentent 80 % de la fraction lourde, contre 10 % pour le $Me_{22}$ ; environ 10 % de la masse étant constituée de produits contenant des motifs Si-O-Si et Si-$CH_2$-Si.

L'une des voies de valorisation de ces disilanes passent par leur transformation en organohalogénosilanes hydrogénés : dichlorométhylhydrogénosilanes (MeH), mono-chlorodiméthylhydrogénosilanes ($Me_2H$), chlorométhyldihydrogénosilane ($MeH_2$).

Un débouché particulièrement intéressant pour ces halogénoorganosilanes hydrogénés tels que les chlorométhylsilanes hydrogénés est la fonctionnalisation de polyorganosiloxanes et notamment ceux obtenus à partir du monomère diméthyldichlorosilane. Par hydrolyse et condensation les MeH, $MeH_2$ et $Me_2H$ peuvent être intégrés dans des squelettes silicones pour former respectivement des motifs siloxyles D ($SiO_{2/2}$) monohydrogéné, et dihydrogéné et des motifs siloxyles M($SiO_{1/2}$) monohydrogénés.

Les halogénoorganosilanes sont également des intermédiaires réactionnels qui peuvent être utilisés dans la préparation de polysilanes par formation de liaison Si-Si via une déshydrogénation. Une autre application des halogénoorganosilanes hydrogénés peut être l'hydrosilylation de composés organiques.

La présente invention s'inscrit dans la problématique d'obtention de manière simple et rentable d'halogénoorganosilanes hydrogénés par hydrogénolyse catalytique de polysilanes.

L'hydrogénolyse catalytique des liaisons Si-Si des polysilanes de la fraction lourde de la synthèse directe, représente l'option de valorisation la plus intéressante de l'art antérieur. Elle permet de transformer des sous-produits à faible valeur ajoutée en intermédiaires réactionnels à forte valeur ajoutée.

On distingue deux types d'hydrogénolyse catalytique de polysilanes, selon le pourvoyeur d'hydrogène retenu, à savoir soit l'acide chlorhydrique en solution, soit l'hydrogène gazeux sous pression.

Le procédé décrit dans le brevet FR 1 447 304 relève du premier type d'hydrogénolyse catalytique. La réaction qui gouverne le procédé selon ce brevet est la suivante :

$$Me_{3-n}\,Cl_nSi-SiCl_mMe_{3-m} + HCl \rightarrow HMe_{3-n}\,SiCl_n + Me_{3-m}SiCl_{m+1}$$

Le catalyseur mis en oeuvre est choisi parmi les amides ou les bases organiques. Ce procédé souffre de deux inconvénients majeurs. Le premier est lié à la stoechiométrie de la réaction selon laquelle pour une mole de disilane on obtient seulement une mole de chlorométhylsilane hydrogéné. Le deuxième inconvénient est lié à la spécificité des catalyseurs utilisés dans ce type de procédé. En effet, lesdits catalyseurs sont préférablement actifs vis-à-vis des disilanes contenant au moins un fragment monoalkylé ($MeCl_2Si$) au détriment des disilanes n'en contenant pas.

Il existe plusieurs propositions techniques antérieures dans lesquelles l'enceinte réactionnelle est alimentée en hydrogène gazeux sous pression. Toutes ces propositions ont en commun des conditions opératoires lourdes et drastiques.

Dans ce registre, le brevet français N° 2 085 143 divulgue l'hydrogénolyse de disilanes $Me_{12}$ en présence d'un catalyseur organométallique constitué par un sel complexe de palladium, le bis-(tributylphosphinedichloropalladium $(PBu_3)_2\,PdCl_2$.

Ce catalyseur d'hydrogénolyse est employé à raison de 1 % en poids. La pression en hydrogène de $211.10^5$ Pa mise en oeuvre, est si élevée qu'elle en est rédhibitoire sur le plan industriel. La température réactionnelle est relativement importante : 120° C. La durée pourtant longue de la réaction ne permet pas d'obtenir des rapports de conversion élevés. (74 %). On soulignera enfin que les produits de départ ne sont pas constitués par un mélange de polysilanes mais par un seul disilane.

Le brevet US 4 079 071 enseigne quant à lui l'hydrogénolyse d'un mélange de disilanes $Me_{11}$, $Me_{12}$, $Me_{22}$,

$Me_{13}$, $Me_{23}$ en présence de 1% de catalyseurs d'hydrogénolyse formés par du bis(tributylphosphine)dichloronickel $(PBu_3)_2NiCl_2$ à une température de 150° C, sous une pression d'hydrogène de $50.10^5$ Pa, pendant 6 heures. Là encore, il convient de noter que ce ne sont pas là des conditions opératoires idéales, d'un point de vue industriel.

Le brevet US N° 5 175 329 décrit un procédé de conversion de polysilanes formés par un mélange de disilanes $Me_{13}$ + $Me_{22}$ + $Me_{12}$ + $Me_{11}$ additionnés de méthyltrichlorosilanes, en monosilanes hydrogénés ou non. Cette transformation s'effectue à l'aide d'un catalyseur d'hydrogénolyse choisi parmi les composés organométalliques à base de nickel, de palladium ou de platine, ou parmi les sels complexes de ces mêmes métaux. Un exemple donné pour ce catalyseur est le bis(tributylphosphine)-dichloronickel : $(Pbu_3)_2NiCl_2$. Selon une variante, le catalyseur d'hydrogénolyse peut être constitué par des formes inorganiques de ces métaux Ni, Pd, Pt, fixés, par exemple, sur un support du type alumine. Le catalyseur de redistribution est choisi parmi les halogénures de phosphonium ou d'ammonium quaternaire, les halogénures d'aluminium ou de bore. Il peut s'agir, par exemple, d'un chlorure de tétrabutylphosphonium. L'hydrogénolyse s'effectue à 135° C sous une pression d'hydrogène de $36.10^5$ Pa pendant de très longues durées qui peuvent atteindre 17 heures, pour un rendement en monosilanes hydrogénés par rapport à la totalité du silicium engagé de l'ordre de 40 %. Au vu de tels résultats, il est difficile de soutenir que ce procédé antérieur est économiquement viable à l'échelle industrielle.

Le brevet français N° 2 342 981 vise l'hydrogénolyse de mélange de disilanes du type de ceux comprenant 81 % de tétrachlorodiméthylsilane ($Me_{11}$), 17 % de trichlorotriméthylsilane ($Me_{21}$), et 2 % de dichlorodiméthylsilane ($Me_{22}$), en présence d'un catalyseur formé par une base aprotique du type hexaméthylphosphoretriamide (HMPT) et par du nickel divisé obtenu par réduction préalable ou in situ d'un dérivé minéral ou organique (cyclopentadiénylnickel ou nickelocène), par un agent réducteur ou par l'hydrogène. La réaction s'opère sous une pression d'hydrogène de $25.10^5$ Pa à 110° C. La durée réactionnelle est inférieure à 1 heure pour une conversion de l'ordre de 70 % et une sélectivité en monosilanes hydrogénés de l'ordre de 56 %. Les conditions opératoires sont ici plus douces, donc plus acceptables mais les performances en termes de conversion et de sélectivité sont largement insuffisantes.

Dans ce procédé, les exemples donnés démontrent que le catalyseur est formé, soit par utilisation d'un composé organométallique du nickel sophistiqué et onéreux, soit par réduction de chlorure de nickel par un ajout supplémentaire d'un réducteur puissant et coûteux tel que le triéthylsilane.

Dans un tel environnement technique, l'un des objectifs essentiel de la présente invention est de proposer un procédé de préparation de méthylmonosilanes hydrogénés, par hydrogénolyse catalytique, sous pression d'hydrogène, de chlorométhyl-polysilanes, qui améliore les procédés connus notamment en termes de facilité de mise en oeuvre, de rentabilité et de performances exprimées par exemple au travers du rendement en monosilanes hydrogénés produits.

Un autre objectif essentiel de la présente invention est de proposer un procédé de production de méthylmonosilanes hydrogénés qui soit efficace et performant pour une grande variété de polysilanes de départ qui peuvent comprendre aussi bien un polysilane donné de type quelconque qu'un mélange de divers polysilanes.

Un autre objectif de la présente invention est de fournir un procédé perfectionné de préparation d'hydrogénosilanes à partir de polysilanes, par hydrogénolyse catalytique sous pression d'hydrogène, qui ne fasse pas intervenir de produits de départ, d'intermédiaires réactionnels ou de co-produits qui soient dangereux à manipuler et/ou toxiques tels que des composés phosphorés.

S'étant fixés ces objectifs, les inventeurs ont eu le mérite d'envisager le perfectionnement souhaité sous l'angle de l'optimisation du système catalytique propre aux réactions d'hydrogénolyse de polysilanes et, particulièrement, de disilanes en monosilanes hydrogénés ou non. C'est ainsi qu'il a été découvert, de manière surprenante et inattendue, un nouveau système catalytique très sélectif et très actif pour la production d'hydrogénométhylchlorosilanes et obtenu par réduction dans le milieu réactionnel (in situ) de sels simples de métaux de transition ne comportant pas de ligands susceptibles de stabiliser ou de complexer le métal dans un degré d'oxydation requis pour l'activation de l'hydrogène moléculaire (zéro ou un), cette classe de ligands non souhaités étant bien définie au sens de la chimie de coordination de ces métaux, ces sels simples se devant d'être associés à des auxiliaires de dissolution choisis parmi les nucléophiles solubles en milieu aprotique.

Il s'ensuit que la présente invention a pour objet un procédé de préparation d'hydrogénosilanes à partir de polysilanes, dans lequel on met en contact de l'hydrogène gazeux sous pression, avec des polysilanes de départ (**I**) formés par un ou plusieurs des composés suivants : $(CH_3)Cl_2Si-SiCl(CH_3)_2$, $(CH_3)Cl_2Si-SiCl_2(CH_3)$ ; $(CH_3)Cl_2Si-Si(CH_3)_3$, $(CH_3)_2ClSi-SiCl(CH_3)_2$, $(CH_3)Cl_2Si-SiCl(CH_3)-SiCl_2(CH_3)$, $(CH_3)Cl_2Si-Si(CH_3)(SiCH_3Cl_2)-SiCl_2CH_3$ pour obtenir des monosilanes (**II**) ;

caractérisé en ce que la mise en contact de polysilane (**I**) et de l'hydrogène s'effectue en présence d'un système catalytique comprenant :

- A - d'une part au moins un précurseur d'au moins un catalyseur d'hydrogénation, ce précurseur A étant choisi parmi les sels d'au moins un métal de transition, dont les ligands anioniques ou neutres sont exempts d'orbitales $\pi$-accepteur, les halogénures, et en particulier les chlorures, étant des ligands tout spécialement préférés ;

- B - et d'autre part au moins un auxiliaire de dissolution du précurseur A dans le milieu réactionnel, cet auxiliaire B étant selectionné parmi les nucléophiles solubles en milieu aprotique, à l'exclusion ou non de l'HMPT, consistant soit dans des sels comportant des ligands anioniques ou neutres exempts d'orbitales $\pi$-accepteur, les halogénures solubles et en particulier les chlorures étant particulièrement préférés, soit dans des ligands $\pi$-accepteurs ;

- à l'exclusion d'agent réducteur.

Le système catalytique AB selon l'invention procure des avantages significatifs notamment au regard des conditions opératoires. En effet, la température réactionnelle peut être abaissée en dessous de 100°C, sans entraîner d'augmentation exagérée de la durée réactionnelle nécessaire et suffisante pour obtenir des conversions de substrats supérieures à 95 % et des rendements en hydrogénés de 70 %. En pratique, ces durées sont inférieures à 8 h, et plus classiquement comprises entre 0,1 et 4 heures.

En outre, grâce au système catalytique AB selon l'invention on peut s'affranchir de recourir à des pressions d'hydrogène gazeux très élevées, qui nécessitent un appareillage sophistiqué et cher. Par exemple, des pressions d'hydrogène $P_{H2}$ de $30.10^5$ Pa ou moins, conviennent parfaitement.

Par ailleurs, le procédé selon l'invention est avantageux car il satisfait largement au minimum requis en ce qui concerne la sécurité de sa mise en oeuvre et la toxicité des produits concernés.

Ce procédé est également performant sur le plan économique, en raison du fait qu'il ne nécessite pas d'équipements complexes et coûteux et que les consommables qu'il requiert, notamment le catalyseur, sont peu onéreux dans les quantités employées.

En résumé, le procédé selon l'invention est particulièrement intéressant car il permet d'atteindre de meilleures sélectivités en monosilanes hydrogénés avec de bons rendements et dans des conditions de faible pression de température et de concentration en métal catalytique.

De manière préférée, les polysilanes de départ (I) concernés par l'invention sont des chlorométhyldisilanes.

Le catalyseur d'hydrogénation sélectionné conformément à l'invention est généré à partir d'un sel simple A d'au moins un métal de transition non complexé par des ligands possédant des propriétés $\pi$-accepteur au sens de la chimie de coordination de ces métaux. De plus, ce sel doit être suffisamment soluble dans le milieu réactionnel, qui est de préférence un milieu aprotique, pour que le métal sous forme oxydé liquide, puisse passer sous forme réduite (degré d'oxydation = O), qui correspond à l'état dans lequel il est actif comme catalyseur. Le fait d'avoir pu découvrir ce critère discriminant pour la sélection de catalyseurs appropriés, relève d'une démarche particulièrement inventive, qui est à mettre au crédit des inventeurs. Ces derniers ont ainsi proposé la sélection de sels de métaux de transition dans lesquels la sphère de coordination du métal ne comprend pas de trop forts ligands (ligands non $\pi$-accepteur), de façon à optimiser la disponibilité du métal sous forme catalytiquement active.

Les ligands appropriés sont ceux qui ne comportent pas d'orbitales $\pi$-accepteur. Ces ligands $\pi$-accepteur, qui sont à écarter conformément à l'invention, sont définis dans *«Cotton, F.A.AND WILKINSON, G. advanced Inorganic Chemistry, 4 TH, Et., 1980, John Wiley & Sons, New-York (Chapitres 3 et 4 et plus particulièrement pages 81-82, 95) », «WILKINSON G. Comprehensive Coordination Chemistry, Pergamon press Oxford* 1987. *Vol 5, (chap. 50 § 50.2.2.) »* ou bien encore « *WILKINSON, G. Comprehensive Coordination Chemistry, pergamon press Oxford 1987 chap. 44 Vol. 4. ».*

Suivant une caractéristique préférée de l'invention, les ligands non $\pi$-accepteurs qui peuvent être sélectionnés à titre de contre-anions dans les sels A de métal de transition du catalyseur, sont des halogénures et plus préférentiellement encore des chlorures.

Ces chlorures ont pour avantage non négligeable d'être non toxiques.

Suivant une disposition avantageuse de l'invention, on fait en sorte que le ou les métaux compris dans le sel métallique A appartiennent au groupe suivant :

Sc, Ti, V, Cr, Mn, Fe, Co, Ni, Cu, Zn, Y, Zr, Nb, Mo, Tc, Ru, Rh, Pd, Ag, Cd, Lu, Hf, Ta, W, Re, Os, Ir, Pr, Au, et de préférence au sous-groupe suivant :

Pt, Ti, Cr, Mn, Fe, Cu, Ag, Au, Ni ; ce dernier étant particulièrement préféré.

De manière non limitative, le procédé selon l'invention englobe le cas où le sel A de métal de transition est incorporé dans le milieu réactionnel au départ de la réaction d'hydrogénolyse catalytique, mais également le cas où on fait en sorte que les conditions soient réunies pour que le sel simple et soluble A d'au moins un métal de transition, se forme in situ à partir d'un précurseur métallique corrodable, supporté ou non et soumis à l'action corrosive d'au moins un acide susceptible de fournir le ou les ligands non $\pi$-accepteurs pour le sel A, le précurseur métallique étant avantageusement choisi parmi les métaux suivants : Co, Fe, Ni, Pd, Pt, Cu.

Cette variante dans laquelle intervient une formation in situ du sel A peut consister à mettre en contact du métal massif, finement divisé ou supporté sur un support solide tel que l'alumine, la silice, le charbon actif etc avec l'acide idoine pour générer le sel A par corrosion du métal, sachant que ce sel devra comporter un ligand non π-accepteur.

Le mode préféré de mise en oeuvre du procédé selon l'invention, reste tout de même celui selon lequel on procède à l'incorporation du sel simple du métal de transition, dans le milieu réactionnel de départ. En tout état de cause, quel que soit le mode d'apport du sel métallique A, on privilégiera, conformément à l'invention, la sélection du sel A dans le groupe de sels comprenant : $NiCl_2$, $CuCl_2$ et $FeCl_2$ ; $NiCl_2$ étant tout spécialement préféré.

S'agissant de l'auxiliaire B de dissolution du catalyseur d'hydrogénation, il convient de préciser tout d'abord, ce que recouvre la notion de solubilité au sens de la présente invention.

Ainsi, il est bien connu que les sels simples des métaux de transition, particulièrement les halogénures, existent sous forme polymérique ou oligomérique à l'état solide. L'action de l'auxiliaire de dissolution a pour effet de rompre cette chaîne et de générer des espèces mono-ou dimériques beaucoup plus solubles. Ces espèces complexes de métaux de transition sont généralement colorées et leur solubilisation dans le milieu polysilanes ou disilanes peut aisément être vérifiée, par exemple, par spectroscopie ultra violet visible.

L'auxiliaire B a pour fonction précurseur de promouvoir l'activité du catalyseur d'hydrogénation en favorisant la dissolution de son sel précurseur dans le milieu réactionnel tout en facilitant le passage du métal de transition sous forme réduite active. L'auxiliaire B concourt aussi au mécanisme de scission des liaisons Si-Si.

Pour l'auxiliaire B les meilleurs résultats sont obtenus avec des composés qui ne sont pas des ligands π-accepteurs, comme par exemple les halogénures solubles et plus particulièrement encore les chlorures. Parmi les halogénures solubles, on peut citer à titre d'exemples non limitatifs, les halogénures de phosphonium, d'ammonium, d'imidazolium. de pyridinium, les halogénures alcalins et alcalinoterreux dont le cation est crypté par des éthers couronnes ou d'autres cryptants comme décrit dans la littérature technique spécialisée.

Cependant, outre les halogénures qui sont préférés, il n'est pas exclu, comme mentionné ci-avant, d'utiliser comme auxiliaire de dissolution, des ligands π-accepteurs tels que les phosphines $PR_3$ (R = alkyle, aryle, etc...), les phosphites $P(OR)_3$ et leurs oxydes, les amines, amides, pyrolidones, les oléfines, dioléfines, polyoléfines, les nitriles, les isonitriles et tous autres composés susceptibles d'aider à la dissolution du sel de métal de transition telle que décrite dans la présente invention.

Les auxiliaires B qui peuvent être privilégiés en pratique sont :

$NBu_4Cl$ ; $PBu_3$ ; $[(Ph)_3 P = N = P(Ph)_3]$ Cl ;
Bu = butyle, Ph = phényle.

Quantitativement, le catalyseur A représente de 0,01 à 5 % en poids de préférence de 0,1 à 1 % en poids par rapport au milieu réactionnel.

Les concentrations de l'auxiliaire B varient quant à elle de 0,1 à 10 % en poids de préférence, et plus préférentiellement encore de 1 à 7 % en poids par rapport au milieu réactionnel.

En ce qui concerne les autres paramètres opératoires, on fixe en pratique conformément à une disposition intéressante de l'invention, la pression d'hydrogène gazeux $P_{H2}$ à une valeur inférieure ou égale à $50 \times 10^5$ Pa, de préférence comprise entre $5 \times 10^5$ et $30 \times 10^5$ Pa, et la température réactionnelle à une valeur inférieure ou égale à 150° C, de préférence comprise entre la température ambiante et 120° C.

Il s'agit là de conditions douces, faciles à mettre en oeuvre et qui permettent d'atteindre des rendements en hydrogénochlorosilanes de 70 % pour une conversion quantitative des disilanes avec des durées réactionnelles inférieures à quelques heures.

En pratique, le milieu réactionnel qui est classiquement contenu dans un autoclave dont l'atmosphère a été « inerté », ne comprend rien d'autres que les polysilanes de départ et le système catalytique AB. On prévoit naturellement des moyens d'introduction de l'hydrogène sous pression, de même que des moyens de chauffage et de refroidissement du contenu du réacteur.

La présente invention sera mieux comprise à l'aide des exemples qui suivent de mise en oeuvre d'une hydrogénolyse catalytique d'un mélange $Me_{11} Me_{12} Me_{22} Me_{13}$, à l'aide d'un système catalytique AB conforme à l'invention, sous pression d'hydrogène. Ces exemples font bien ressortir tous les avantages du procédé suivant l'invention et laissent entrevoir toutes les variantes de mise en oeuvre envisageables et couvertes par l'invention.

## EXEMPLES

### EXEMPLES 1 A 14

La procédure générale qui va suivre est applicable aux exemples donnés dans le tableau suivant. On place dans un autoclave de 150 mL en acier inox 316, sous atmosphère d'argon, l'auxiliaire de dissolution B, le précurseur de métal de transition A et 36 g d'un mélange de disilanes : $(CH_3)Cl_2Si-SiCl_2(CH_3)$ [51,8 %] ; $(CH_3)_2ClSi-SiCl_2(CH_3)$

[27,9 %] ; $(CH_3)_2ClSi-SiCl(CH_3)_2$[7,6 %] ; $(CH_3)_3Si-SiCl_2(CH_3)$[2,1 %] et d'autres produits en plus faibles proportions possédant des motifs Si-O-Si et Si-$CH_2$-Si [environ 10 %]. Après avoir purgé le réacteur sous hydrogène, le mélange est placé sous $30.10^5$ Pa puis chauffé à la température désirée (T). Après une certaine durée comme indiquée dans le tableau, le réacteur est refroidi à -30° C et des échantillons du milieu sont prélevés pour analyse par chromatographie en phase gaz. Les résultats de ces analyses sont portées dans le tableau ci-après.

| Exemples | B | | A | | T | Durée | $R_T$ | $R_H$ | $S_H$ | RENDEMENTS | | | | | |
|---|---|---|---|---|---|---|---|---|---|---|---|---|---|---|---|
| | | | | | | | % mol | % mol | % mol | % mol | | | | | |
| | nature | mmol | nature | mmol | °C | (heure) | | | | MeH$_2$ | Me$_2$H | MeH | Me$_3$ | Me | Me$_2$ |
| 1 | NBu$_4$Cl | 5,315 | Aucun | 0 | 100 | 2,9 | 66,5 | 26,5 | 39,9 | 2 | 0 | 24,5 | 0,9 | 20,1 | 19 |
| 2 | Aucun | 0,000 | NiCl$_2$ | 1,357 | 100 | 4 | 0 | 0 | 0 | 0 | 0 | 0 | 0 | 0 | 0 |
| 3 | NBu$_4$Cl | 5,981 | NiCl$_2$ | 1,311 | 100 | 0,2 | 99,5 | 66,8 | 67,1 | 13,4 | 1,7 | 51,7 | 0,6 | 12,4 | 19,7 |
| 4 | Aucun | 0,000 | (NBu$_4$)$_2$NiCl$_4$ | 1,618 | 100 | 2 | 97,9 | 66 | 67,4 | 13 | 1 | 52,1 | 0 | 11,5 | 20,2 |
| 5 | NBu$_4$Cl | 3,271 | (NBu$_4$)$_2$NiCl$_4$ | 1,363 | 100 | 0,23 | 98,9 | 65 | 65,7 | 12,5 | 1,6 | 50,9 | 0,5 | 12,4 | 20,9 |
| 6 | PBu$_3$ | 7,287 | Aucun | 0 | 100 | 6 | 63,5 | 22,4 | 35,3 | 0,6 | 0 | 21,8 | 1,7 | 28,6 | 10,5 |
| 7 | PBu$_3$ | 6,690 | NiCl$_2$ | 1,426 | 100 | 1,5 | 93,4 | 66 | 70,7 | 15,7 | 1 | 49,3 | 0,7 | 10,9 | 15,6 |
| 8a | Aucun | 0,000 | (PBu$_3$)$_2$NiCl$_2$ | 0,939 | 100 | 1,5 | 4 | 0 | 0 | 0 | 0 | 0 | 0 | 1,1 | 3 |
| 8b | Aucun | 0,000 | (PBu$_3$)$_2$NiCl$_2$ | 0,939 | 147 | 6,3 | 84,1 | 49,7 | 59 | 14,6 | 1,2 | 33,8 | 1 | 19,3 | 14,2 |
| 9 | NBu$_4$Cl | 6,99 | Poudre de Ni$^a$ et HCl gazeux | 0,886 | 100 | 0,4 | 99 | 63,7 | 64,3 | 11 | 1,3 | 51,4 | 0 | 13,5 | 21,8 |
| 10 | NBu$_4$I | 5,580 | NiCl$_2$ | 1,519 | 100 | 1,5 | 87,5 | 53,7 | 61,4 | 8,2 | 0,9 | 44,6 | 0,8 | 12,1 | 20,9 |
| 11 | PPNCl$^b$ | 5,247 | NiCl$_2$ | 1,835 | 100 | 0,13 | 95,4 | 59,6 | 62,4 | 9,9 | 2,6 | 47 | 1 | 10,8 | 23,9 |
| 12 | NBu$_4$Cl | 6,020 | FeCl$_2$ | 1,400 | 100 | 5 | 97,3 | 67,4 | 69,3 | 14,6 | 1,9 | 51 | 0,8 | 10,6 | 18,4 |
| 13 | NBu$_4$Cl | 6,150 | CuCl$_2$ | 1,643 | 100 | 6,8 | 88,5 | 51,8 | 58,6 | 6,7 | 0,8 | 44,3 | 0,9 | 16,2 | 19,6 |
| 14 | NBu$_4$Cl | 5,685 | NiCl$_2$ | 1,36 | 70 | 1,3 | 95,0 | 68,0 | 71,6 | 13,1 | 2,2 | 52,7 | 1,0 | 10,6 | 15,2 |

[a] + 8,3 mmoles HCl gazeux

[b] PPNCl correspond à [(Ph)$_3$P=N=P(Ph)$_3$]Cl

$R_T$ = Rendement en monosilanes (MeH$_2$+Me$_2$H+MeH+Me$_3$+Me+Me$_2$) calculé sur le Si introduit en % molaire des disilanes scindables (Me$_{11}$+Me$_{12}$+Me$_{13}$)

$R_H$ = Rendement en monosilanes hydrogénés (MeH$_2$+Me$_2$H+MeH) en % molaire des disilanes scindables (Me$_{11}$+Me$_{12}$+Me$_{13}$)

$S_H$ = Sélectivité en monosilanes hydrogénés = $R_H/R_T$

Rendements exprimés en % molaire des disilanes scindables (Me$_{11}$+Me$_{12}$+Me$_{13}$)

*COMMENTAIRES DES EXEMPLES :*

Les exemples 1 à 3 montrent l'avantage évident à utiliser le système catalytique AB comme décrit dans l'invention par rapport aux composants A et B pris séparément. Les exemples 2, 4 et 5 démontrent que les sels de nickel solubles et ne possédant pas de ligands $\pi$-accepteurs sont d'excellents précurseurs du catalyseur actif d'hydrogénation. Les exemples 6 à 8 démontrent que la tributylphosphine peut être utilisée comme auxiliaire de solubilisation mais ne peut être utilisée en tant que ligand du sel de métal de transition A sous peine d'obtenir un système catalytique dont l'activité est devenue si faible (ex 8a et 8b) qu'il en devient peut intéressant. L'exemple 9 montre que la composante A peut être obtenue par génération in-situ du sel simple de nickel grâce à l'action du chlorure d'hydrogène sur le métal massif en poudre. Les exemples 10 et 11 illustrent le fait que l'auxiliaire de solubilisation peut être un autre halogénure soluble ou que le contre cation de l'halogénure n'est pas forcément le tetrabutylammonium. Les exemples 12 et 13 prouvent que d'autres sels simples de métaux de transition peuvent être utilisés pour le procédé. Enfin, l'exemple 14 montre que le procédé suivant l'invention peut être opéré à des températures beaucoup plus basses que celles généralement revendiquées dans l'état de l'art antérieur sans préjudice pour la propriété la plus recherchée, c'est-à-dire la fabrication d'hydrogénométhylchlorosilanes.

Seuls les exemples 3,5,7,10-14 font partie de l'invention.

## Revendications

**1.** Procédé de préparation d'hydrogénosilanes à partir de polysilanes, dans lequel on met en contact de l'hydrogène gazeux sous pression, avec des polysilanes de départ (**I**) formés par un ou plusieurs des composés suivants :

$(CH_3)Cl_2Si\text{-}SiCl(CH_3)_2$, $(CH_3)Cl_2Si\text{-}SiCl_2(CH_3)$, $(CH_3)Cl_2Si\text{-}Si(CH_3)_3$,
$(CH_3)_2ClSi\text{-}SiCl(CH_3)_2$, $(CH_3)Cl_2Si\text{-}SiCl(CH_3)\text{-}SiCl_2(CH_3)$,
$(CH_3)Cl_2Si\text{-}Si(CH_3)(SiCH_3Cl_2)\text{-}SiCl_2CH_3$

pour obtenir des monosilanes (**II**);
    **caractérisé en ce que** la mise en contact de polysilane (**I**) et de l'hydrogène s'effectue en présence d'un système catalytique comprenant :

- A - d'une part au moins un précurseur d'au moins un catalyseur d'hydrogénation, ce précurseur A étant choisi parmi les sels d'au moins un métal de transition, dont les ligands anioniques ou neutres sont exempts d'orbitales $\pi$-accepteur ;
- - B - et d'autre part au moins un auxiliaire de dissolution du précurseur A dans le milieu réactionnel, cet auxiliaire B étant selectionné parmi les nucléophiles solubles en milieu aprotique, consistant soit dans des sels comportant des ligands anioniques ou neutres exempts d'orbitales $\pi$-accepteur, soit dans des ligands $\pi$-accepteurs ;
- à l'exclusion d'agent réducteur.

**2.** Procédé selon la revendication 1, **caractérisé en ce que** le ou les métaux compris dans la structure du sel métallique A appartiennent au groupe suivant :

Sc, Ti, V, Cr, Mn, Fe, Co, Ni, Cu, Zn, Y, Zr, Nb, Mo, Tc, Ru, Rh, Pd, Ag, Cd, Lu, Hf, Ta, W, Re, Os, Ir, Pr, Au.

**3.** Procédé selon la revendication 1 ou la revendication 2, **caractérisé en ce que** le sel A est obtenu in situ à partir d'un précurseur métallique corrodable, supporté ou non et soumis à l'action corrosive d'au moins un acide susceptible de fournir le ou les ligands non $\pi$-accepteurs pour le sel A.

**4.** Procédé selon l'une quelconque des revendications 1 à 3, **caractérisé en ce que** le sel A comporte au moins l'un des sels du groupe constitué par :
    $NiCl_2$, $CuCl_2$, $FeCl_2$
et l'auxiliaire B comporte au moins l'un des produits du groupe constitué par :

$NBu_4Cl$ ; $PBu_3$ ; $[(Ph)_3 P = N = P(Ph_3)] Cl$ ;
Bu = butyle, Ph = phényle.

**5.** Procédé selon l'une quelconque des revendications 1 à 4, **caractérisé en ce que** l'on fixe la pression d'hydrogène gazeux $P_{H2}$ à une valeur inférieure ou égale à 50 x 10$^5$ Pa, et la température réactionnelle à une valeur inférieure ou égale à 150°C.

**Claims**

1. Process for the preparation of hydrosilanes from polysilanes, in which gaseous hydrogen under pressure is brought into contact with starting polysilanes (**I**) formed by one or more of the following compounds:

   $(CH_3)Cl_2Si$-$SiCl(CH_3)_2$. $(CH_3)Cl_2Si$-$SiCl_2(CH_3)$, $(CH_3)Cl_2Si$-$Si(CH_3)_3$, $(CH_3)_2ClSi$-$SiCl(CH_3)_2$, $(CH_3)Cl_2Si$-$SiCl(CH_3)$-$SiCl_2(CH_3)$, $(CH_3)Cl_2Si$-$Si(CH_3)(SiCH_3Cl_2)$-$SiCl_2CH_3$
   in order to obtain monosilanes (**II**) ;

   **characterized in that** polysilane (**I**) and hydrogen are brought into contact in the presence of a catalytic system comprising

   - A - on the one hand, at least one precursor of at least one hydrogenation catalyst, this precursor A being chosen from salts of at least one transition metal, the anionic or neutral ligands of which are devoid of $\pi$-acceptor orbitals;
   - B - and, on the other hand, at least one aid for dissolution of the precursor A in the reaction medium, this aid B being selected from nucleophiles which are soluble in an aprotic medium, consisting either of salts comprising anionic or neutral ligands which are devoid of $\pi$-acceptor orbitals, or of $\pi$-acceptor ligands;
   - with the exclusion of a reducing agent.

2. Process according to Claim 1, **characterized in that** the metal or metals included in the structure of the metal salt A belong to the following group:

   Sc, Ti, V, Cr, Mn, Fe, Co, Ni, Cu, Zn, Y, Zr, Nb, Mo, Tc, Ru, Rh, Pd, Ag, Cd, Lu, Hf, Ta, W, Re, Os, Ir, Pr and Au.

3. Process according to Claim 1 or Claim 2, **characterized in that** the salt A is obtained in situ from a corrodable metallic precursor, which may or may not be supported, subjected to the corrosive action of at least one acid capable of providing the non-$\pi$-acceptor ligand or ligands for the salt A.

4. Process according to any one of Claims 1 to 3, **characterized in that** the salt A is formed by at least one of the salts from the group consisting of:

   $NiCl_2$, $CuCl_2$ and $FeCl_2$

   and the aid B comprises at least one of the products from the group consisting of:

   $NBu_4Cl$; $PBu_3$; $[(Ph)_3P=N=P(Ph_3)]Cl$;
   Bu = butyl, Ph = phenyl.

5. Process according to any of Claims. 1 to 4, **characterized in that** the hydrogen gas pressure $P_{H2}$ is fixed at a value of less than or equal to 50 $\times$ 10$^5$ Pa, and the reaction temperature is fixed at a value of less than or equal to 150°C.

**Patentansprüche**

1. Verfahren zur Herstellung von Hydrogensilanen ausgehend von Polysilanen, bei dem man Wasserstoffgas unter Druck mit Polysilanen der Formel (I) als Ausgangsstoffe in Kontakt bringt, gebildet durch eine oder mehrere der folgenden Verbindungen:

   $(CH_3)Cl_2Si$-$SiCl(CH_3)_2$, $(CH_3)Cl_2Si$-$SiCl_2(CH_3)$, $(CH_3)Cl_2Si$-$Si(CH_3)_3$, $(CH_3)_2ClSi$-$SiCl(CH_3)_2$, $(CH_3)Cl_2Si$-$SiCl(CH_3)$-$SiCl_2(CH_3)$, $(CH_3)Cl_2Si$-$Si(CH_3)(SiCH_3Cl_2)$-$SiCl_2CH_3$,
   um Monosilane (II) zu erhalten, **dadurch gekennzeichnet, daß** das In-Kontakt-Bringen von Polysilan (I) und Wasserstoff in Anwesenheit eines katalytischen Systems erfolgt, umfassend:

- A - einerseits mindestens einen Vorläufer von mindestens einem Hydrierungskatalysator, wobei dieser Vorläufer A ausgewählt wird unter den Salzen von mindestens einem Übergangsmetall, dessen anionische oder neutrale Liganden frei von $\pi$-Akzeptor-Orbitalen sind;
- B - andererseits mindestens einen Hilfsstoff für die Auflösung des Vorläufers A in dem Reaktionsmedium, wobei dieser Hilfsstoff B ausgewählt wird unter den im aprotischen Medium löslichen Nucleophilen, bestehend entweder aus Salzen, die anionische oder neutrale Liganden umfassen, die frei von $\pi$-Akzeptor-Orbitalen sind, oder aus $\pi$-Akzeptor-Liganden;
- mit Ausnahme von Reduktionsmittel.

2. Verfahren nach Anspruch 1, **dadurch gekennzeichnet, daß** das oder die Metalle, die von der Struktur des Metallsalzes A umfaßt werden, aus der folgenden Gruppe stammen:

   Sc, Ti, V, Cr, Mn, Fe, Co, Ni, Cu, Zn, Y, Zr, Nb, MO, Tc, Ru, Rh, Pd, Ag, Cd, Lu, Hf, Ta, W, Re, Os, Ir, Pr, Au.

3. Verfahren nach Anspruch 1 oder 2, **dadurch gekennzeichnet, daß** das Salz A in situ ausgehend von einem angreifbaren, metallischen Vorläufer erhalten wird, der auf einem Träger aufgebracht ist oder nicht, und der angreifenden Wirkung von mindestens einer Säure unterzogen wird, die geeignet ist, den oder die Nicht-$\pi$-Akzeptor-Liganden für das Salz A zu liefern.

4. Verfahren nach irgendeinem der Ansprüche 1 bis 3, **dadurch gekennzeichnet, daß** das Salz A mindestens eines der Salze aus der folgenden Gruppe umfaßt:

   $NiCl_2$, $CuCl_2$, $FeCl_2$, und

   der Hilfsstoff B mindestens eines der Produkte aus der folgenden Gruppe umfaßt:

   $NBu_4Cl$; $PBu_3$; $[(Ph)_3P=N=P(Ph_3)]$;
   Bu = Butyl, Ph = Phenyl.

5. Verfahren nach irgendeinem der Ansprüche 1 bis 4 **dadurch gekennzeichnet, daß** man den Druck von Wasserstoffgas $P_{H2}$ auf einen Wert von unter oder gleich $50 \times 10^5$ Pa und die Reaktionstemperatur auf einen Wert von unter oder gleich 150 °C einstellt.